# EUROPÄISCHE PATENTSCHRIFT

(11) **EP 2 619 476 B1**
(45) Veröffentlichungstag und Bekanntmachung des Hinweises auf die Patenterteilung: **10.07.2019**
(21) Anmeldenummer: 11776334.2
(22) Anmeldetag: 05.09.2011
(51) Int. Cl.: F16F 15/123, F16F 15/134, F16F 15/12

(54) **DREHMOMENTÜBERTRAGUNGSVORRICHTUNG**
TORQUE-TRANSMISSION DEVICE
DISPOSITIF DE TRANSMISSION DE COUPLE

(30) Priorität: 20.09.2010 DE 102010046071
(43) Veröffentlichungstag der Anmeldung: 31.07.2013
(73) Patentinhaber: Schaeffler Technologies AG & Co. KG, 91074 Herzogenaurach (DE)
(72) Erfinder: JUNKER, Uli, 77652 Offenburg (DE)
(86) Internationale Anmeldenummer: PCT/DE2011/001685
(87) Internationale Veröffentlichungsnummer: WO 2012/048674

(56) Entgegenhaltungen:
- WO-A1-2006/114236
- WO-A2-2007/000151
- DE-A1- 3 616 301

## Beschreibung

Die vorliegende Erfindung betrifft eine Drehmomentübertragungsvorrichtung gemäß dem Oberbegriff des Patentanspruchs 1.

Eine solche Drehmomentübertragungsvorrichtung ist beispielsweise in der WO 2007/000151 A2 beschrieben und exemplarisch in Figur 4 der vorliegenden Anmeldung dargestellt.

Die Drehmomentübertragungsvorrichtung 101 weist eine erste Baugruppe 102 auf, die mit einer Abtriebswelle eines Motors verbindbar ist. Ferner weist die Drehmomentübertragungsvorrichtung 101 eine nicht dargestellte, zweite Baugruppe auf, die getriebeseitig vormontierbar ist. Beide Baugruppen sind in axialer Richtung durch eine Steckverbindung 103 mit ineinandergreifenden Profilierungen 105 und nicht dargestellten Gegenprofilierungen miteinander koppelbar. Um eine einfache Montage und Demontage der Drehmomentübertragungsvorrichtung 101 zu ermöglichen, ist die Verbindung begrenzt axial verlagerbar.

Die axiale Steckverbindung 103 weist ein Umfangsspiel auf, da Profilierungen 105 und Gegenprofilierungen nicht beliebig genau zu vertretbaren Kosten hergestellt werden können. Daher kann es im Betrieb der Drehmomentübertragungsvorrichtung 101, das heißt unter Motorlast, zwischen den ineinandergreifenden Profilierungen 105 und Gegenprofilierungen zu Anschlags- bzw. Klappergeräuschen kommen. Diese Geräusche entstehen durch Torsionsschwingungen, Taumelschwingungen und Axialschwingungen in der Drehmomentübertragungsvorrichtung 101 bzw. in den eingangs- und ausgangsseitig mit der Drehmomentübertragungsvorrichtung 101 verbundenen Baugruppen.

Zur Vermeidung der Anschlags- bzw. Klappergeräusche sind die beiden Baugruppen, die durch die Steckverbindung 103 miteinander koppelbar sind, in der WO 2007/000151 A2 über eine Verspannungseinrichtung 104 in Umfangsrichtung miteinander verspannbar. Die Verspannungseinrichtung 104 weist mehrere Energiespeicher 109 und einen durch die Energiespeicher 109 beaufschlagbaren Verspannring 108 auf. Wenn der mit der Eingangsseite der Drehmomentübertragungsvorrichtung 101 verbundene Motor in seiner Hauptbetriebsrichtung, beispielsweise im Zugbetrieb arbeitet, verhindert die entgegengerichtete Verspannung durch die Verspannungseinrichtung 104 ein Anschlagen bzw. Klappern der ineinandergreifenden Profilierungen 105 und Gegenprofilierungen der axialen Steckverbindung 103.

In der WO 2007/000151 A2 weist der Verspannring 108 einen im Wesentlichen S-förmigen Anlageabschnitt 110 mit einem im Wesentlichen geraden Anlagebereich auf, an dem der jeweilige Energiespeicher 109 teilweise anliegt. Ein radial weiter außen liegendes, freies Ende des Anlageabschnitts 110 grenzt an einen Ausgangsflansch 106 der ersten Baugruppe 102 an bzw. ist von diesem Ausgangsflansch 106 durch einen schmalen Spalt beabstandet.

Im Betrieb der Drehmomentübertragungsvorrichtung 101 wird der jeweilige Energiespeicher 109 durch die auf ihn wirkende Zentrifugalkraft radial nach außen gedrängt. Durch den im Wesentlichen S-förmigen Anlageabschnitt 110 besteht die Gefahr, dass sich der Energiespeicher 109 im Bereich des in Richtung des freien Endes auslaufenden S-Bogens des Anlageabschnitts 110 in den Spalt zwischen dem Ausgangsflansch 106 und dem Anlageabschnitt 110 schiebt. Durch die Zentrifugalkraft wirkt der Energiespeicher 109 wie ein Keil, der den Ausgangsflansch 106 und den Anlageabschnitt 110 bzw. den kompletten Verspannring 108 auseinander schiebt. Ferner ist es von Nachteil, dass durch die ungenaue Führung durch den Anlageabschnitt 110 der Energiespeicher 109 unter Einwirkung der Zentrifugalkraft im Verspannring 108 ausknicken kann.

Durch beide zuvor beschriebenen Effekte kann die Funktion der Verspannungseinrichtung 104 im Betrieb der Drehmomentübertragungsvorrichtung 101 nachteilig beeinflusst bzw. vollständig aufgehoben werden.

Es ist daher Aufgabe der vorliegenden Erfindung, eine Drehmomentübertragungsvorrichtung anzugeben, bei der die zuvor beschriebenen, durch die Zentrifugalkraft im Betrieb der Drehmomentübertragungsvorrichtung bedingten Effekte verhindert werden können.

Erfindungsgemäß gelöst wird diese Aufgabe durch eine Drehmomentübertragungsvorrichtung gemäß Patentanspruch 1 mit zumindest einer ersten Baugruppe, die mit einer Abtriebswelle eines Motors verbindbar ist, und zumindest einer zweiten Baugruppe, die getriebeseitig vormontierbar ist, wobei beide Baugruppen in axialer Richtung durch zumindest eine Steckverbindung mit ineinandergreifenden Profilierungen und Gegenprofilierungen miteinander koppelbar sind und durch zumindest eine Verspannungseinrichtung, die zumindest einen Energiespeicher und zumindest einen durch den Energiespeicher beaufschlagbaren Verspannring aufweist, verspannbar sind. Der Verspannring weist zumindest einen Schalenabschnitt auf, der den Energiespeicher zumindest teilweise im Wesentlichen schalenförmig umgibt.

Die schalenförmige Lagerung des Energiespeichers durch den Schalenabschnitt verhindert ein Abknicken des Energiespeichers im Verspannring während des Betriebs, das heißt unter Einwirkung der Zentrifugalkraft. Während des Betriebs der Drehmomentübertragungsvorrichtung ist es somit möglich, die Funktion der Verspannungseinrichtung zuverlässig beizubehalten, nämlich das Auftreten von Anschlags- bzw. Klappergeräuschen, insbesondere aufgrund von Torsionsschwingungen, Taumelschwingungen und Axialschwingungen, zu verringern bzw. zu verhindern.

Bevorzugte Ausführungsbeispiele der Erfindung sind in den abhängigen Patentansprüchen dargelegt.

Insbesondere erfolgt durch die Verspannungseinrichtung eine Verspannung der axialen Steckverbindung in Umfangsrichtung, indem die Verspannungseinrichtung mit den Profilierungen und/oder Gegenprofilierungen der Steckverbindung zusammenwirkt. Bei den Profilierungen kann es sich beispielsweise um eine Innenverzahnung handeln, während die Gegenprofilierungen als Außenverzahnung ausgebildet sind. Die Innenverzahnung greift im Wesentlichen formschlüssig in die Außenverzahnung, wobei die bereits zuvor erwähnten Fertigungstoleranzen unter Maßgabe einer wirtschaftlichen Herstellung der Drehmomentübertragungsvorrichtung keinen absoluten Formschluss in Umfangsrichtung und radialer Richtung zulassen. Ferner muss auch die axiale Verschiebbarkeit zwischen Innenverzahnung und Außenverzahnung gewahrt bleiben, um eine einfache Montage und Demontage der ersten und zweiten Baugruppen zu ermöglichen.

Vorzugsweise weist eine Öffnung des Schalenabschnitts, in der der Energiespeicher vorgesehen ist, in Richtung einer Rotationsachse der Drehmomentübertragungsvorrichtung. Im Betrieb der Drehmomentübertragungsvorrichtung wird somit der Energiespeicher durch die auf ihn wirkende Zentrifugalkraft fester und/oder tiefer in den Schalenabschnitt gedrückt, wodurch eine Verschiebung des Energiespeichers in einen nicht gewünschten Bereich der Drehmomentübertragungsvorrichtung verhindert wird.

Weiterhin vorzugsweise ist der Schalenabschnitt ein einem Außenumfang des Verspannrings ausgebildet. Hierdurch wird in einem Innenbereich des Verspannrings Bauraum für weitere Bauteile der Drehmomentübertragungsvorrichtung geschaffen.

Es ist von Vorteil, wenn der Schalenabschnitt als Rotationsschalenabschnitt ausgebildet ist, das heißt sich zumindest teilweise um die Rotationsachse der Drehmomentübertragungsvorrichtung erstreckt. Da sich der Energiespeicher unter Einfluss der Zentrifugalkraft über eine größere Fläche an den Rotationsschalenabschnitt anschmiegen kann, verbessert sich das Verschleißverhalten der Drehmomentübertragungsvorrichtung.

Gemäß einem bevorzugten Ausführungsbeispiel geht der Schalenabschnitt auf einer Seite in einen Radialabschnitt des Verspannrings über. Vorzugsweise sind der Schalenabschnitt und der Radialabschnitt einteilig ausgebildet. Jedoch ist es auch möglich, den Schalenabschnitt beispielsweise stoffschlüssig mit dem Radialabschnitt des Verspannrings zu verbinden. Die Seite, auf der der Schalenabschnitt in den Radialabschnitt übergeht, ist vorzugsweise einem Ausgangsflansch der ersten Baugruppe in axialer Richtung der Drehmomentübertragungsvorrichtung gegenüberliegend angeordnet, bzw. vom Ausgangsflansch der ersten Baugruppe beabstandet.

Weiterhin vorzugsweise weist der Schalenabschnitt auf einer anderen Seite, vorzugsweise der Seite, die in axialer Richtung näher als die im Absatz zuvor genannte Seite am Ausgangsflansch der ersten Baugruppe liegt, eine freie Kante auf. Vorzugsweise springt diese freie Kante vom in radialer Richtung am weitesten außen liegenden Bereich des Schalenabschnitts 0,5 mm bis 3,0 mm, vorzugsweise 0,75 mm bis 2,0 mm, insbesondere vorzugsweise 1,0 mm bis 1,5 mm in radialer Richtung zu einer Rotationsachse der Drehmomentübertragungsvorrichtung vor. Durch diese Ausgestaltung kann zuverlässig verhindert werden, dass der Energiespeicher aus dem Schalenabschnitt herausspringt und sich unter Einfluss der Zentrifugalkraft beispielsweise zwischen den Ausgangsflansch der ersten Baugruppe und die freie Kante des Schalenabschnitts bzw. des Verstellrings schiebt.

Vorzugsweise weist die erste Baugruppe einen Ausgangsflansch auf, der zumindest drehfest verbunden oder einteilig mit den Profilierungen oder Gegenprofilierungen der Steckverbindung ausgebildet ist. Weiterhin vorzugsweise ist der im Schalenabschnitt vorgesehene Energiespeicher in axialer Richtung zwischen dem Ausgangsflansch und dem Radialabschnitt des Verspannrings angeordnet.

Gemäß einem bevorzugten Ausführungsbeispiel weist der Schalenabschnitt einen Öffnungswinkel α auf, wobei 90°<α<180°, vorzugsweise 90°<α<135°, insbesondere vorzugsweise 90°<α<120° ist. Hierdurch ist es möglich, ein Herausspringen des Energiespeichers aus dem Schalenabschnitt zuverlässig zu verhindern.

Es ist von Vorteil, wenn mehrere Schalenabschnitte, in denen jeweils zumindest ein Energiespeicher vorgesehen ist, vorzugsweise gleichmäßig verteilt, in Umfangsrichtung des Verspannrings ausgebildet sind. Hierdurch erfolgt eine gleichmäßige Beaufschlagung des Verspannrings durch die Energiespeicher.

Gemäß einem weiteren bevorzugten Ausführungsbeispiel ist der Energiespeicher als Druckfeder, vorzugsweise als gerade Druckfeder ausgebildet. Alternativ oder zusätzlich ist der Verspannring vorzugsweise als Blechbauteil ausgebildet.

Vorzugsweise ist die erste Baugruppe als Torsionsdämpfer, insbesondere vorzugsweise als Zweimassenschwungrad, ausgebildet. Die zweite Baugruppe ist vorzugsweise als Kupplung, insbesondere vorzugsweise als Doppelkupplung, ausgebildet.

Die vorliegende Erfindung wird nachfolgend anhand von bevorzugten Ausführungsbeispielen in Verbindung mit den zugehörigen Figuren näher erläutert. In diesen zeigen:
- Figur 1: einen Halbschnitt durch ein Ausführungsbeispiel einer Drehmomentübertragungsvorrichtung,
- Figur 2: eine perspektivische Detaildarstellung einer Verspannungseinrichtung der Drehmomentübertragungsvorrichtung aus Figur 1 mit Energiespeicher,
- Figur 3: eine perspektivische Detaildarstellung der Verspannungseinrichtung aus Figur 2 ohne Energiespeicher und
- Figur 4: einen Halbschnitt durch eine Drehmomentübertragungsvorrichtung des Stands der Technik.

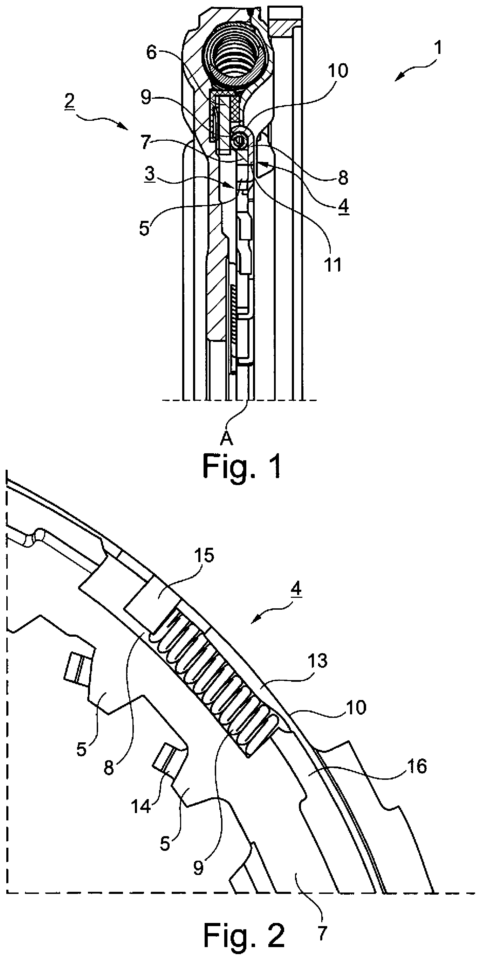

In Figur 1 ist ein Ausführungsbeispiel einer Drehmomentübertragungsvorrichtung 1 in einem Halbschnitt dargestellt. Die Drehmomentübertragungsvorrichtung 1 weist eine Rotationsachse A auf, die mit Bezug auf Figur 1 in einer Links-Rechts-Richtung verläuft. Um die Rotationsachse A ist die Drehmomentübertragungsvorrichtung 1 drehbar gelagert.

Die Drehmomentübertragungsvorrichtung 1 weist zumindest eine erste Baugruppe 2 und eine nicht dargestellte, zweite Baugruppe auf. Die erste Baugruppe 2 ist mit einer Abtriebswelle eines Motors, beispielsweise einer Kurbelwelle eines Verbrennungsmotors, verbindbar. Vorzugsweise ist die erste Baugruppe 2 als Torsionsdämpfer ausgebildet, und insbesondere vorzugsweise als Zweimassenschwungrad ausgebildet. Die zweite Baugruppe ist getriebeseitig vormontierbar und vorzugsweise als Kupplung, insbesondere vorzugsweise als Doppelkupplung, ausgebildet.

Auf ihrer Ausgangsseite weist die erste Baugruppe 2 einen Ausgangsflansch 6 auf. Auf ihrer Eingangsseite weist die zweite Baugruppe einen nicht dargestellten Mitnehmerring auf. Zur Übertragung von Drehmomenten sind die Ausgangsseite der ersten Baugruppe 2 und die Eingangsseite der zweiten Baugruppe durch zumindest eine in axialer Richtung begrenzt verlagerbare Steckverbindung 3 koppelbar bzw. gekoppelt und über zumindest eine Verspannungseinrichtung 4 in Umfangsrichtung verspannbar bzw. verspannt.

Zur Kopplung weist die Steckverbindung 3 ineinandergreifende Profilierungen 5 und nicht dargestellte Gegenprofilierungen auf. Vorzugsweise sind die Profilierungen 5 im Innenumfang eines Profilrings 7 vorgesehen. Der Profilring 7 ist drehfest mit dem Ausgangsflansch 6 der ersten Baugruppe 2 verbunden, kann jedoch auch einteilig mit dem Ausgangsflansch 6 ausgebildet sein.

Die Verspannungseinrichtung 4 ist vorzugsweise in einem begrenzten Bereich verdrehbar bezüglich des Profilrings 7 und ist mit dem Profilring 7 in axialer Richtung der Drehmomentübertragungsvorrichtung 1 verbunden.

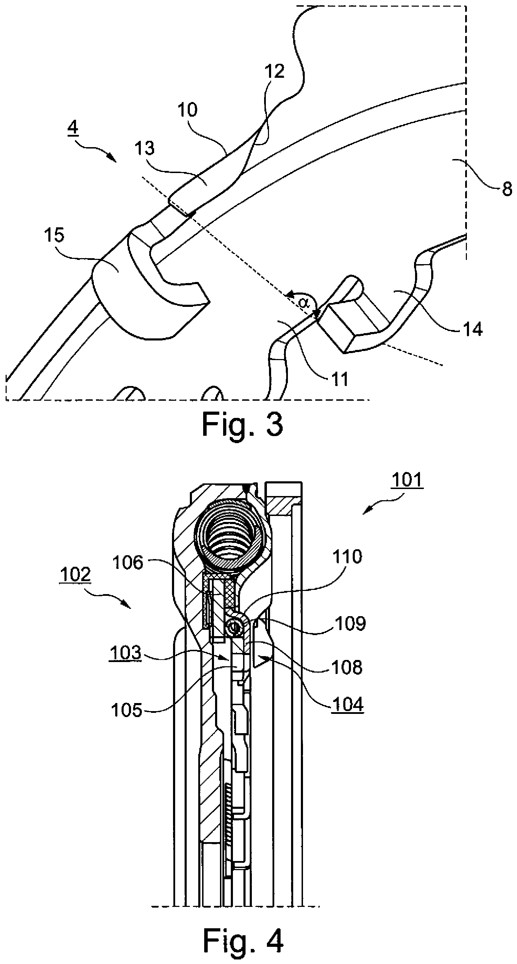

Die Profilierungen 5 des Profilrings 7 sind beispielsweise als Innenverzahnung ausgebildet, während die nicht dargestellten Gegenprofilierungen beispielsweise als Außenverzahnung auf einem in axialer Richtung in den Profilring 7 eingeschobenen, nicht dargestellten Eingangsring ausgebildet sind. Der Eingangsring ist vorzugsweise drehfest mit dem Mitnehmerring der zweiten Baugruppe verbunden oder einteilig mit diesem ausgebildet. Der Aufbau und die Funktion der Steckverbindung 3 und der Verspannungseinrichtung 4 sind beispielsweise in der WO 2007/000151 A2 beschrieben, auf die diesbezüglich ausdrücklich verwiesen wird. Die Verspannungseinrichtung 4, die im Detail in den Figuren 2 und 3 dargestellt ist, weist zumindest einen Verspannring 8 und zumindest einen, vorzugsweise mehrere, Energiespeicher 9 auf, um ein Umfangsspiel der Steckverbindung 3 auszugleichen.

Die Energiespeicher 9 sind in radialer Richtung innerhalb des Verspannrings 8 angeordnet. Um den Verspannring 8 in einem begrenzten Bereich relativ zum Profilring 7 verdrehen zu können, stützt sich ein Ende des jeweiligen Energiespeichers 9 an einem Halter 16 des Profilrings 7 ab, während sich ein anderes Ende des jeweiligen Energiespeichers 9 an einem Gegenhalter 15 des Verspannrings 8 abstützt. Unter Vorspannung der Energiespeicher 9 ist der Verspannring 8 somit gegen den Profilring 7 in einem begrenzten Bereich verdrehbar. Bei den Energiespeichern 9 handelt es sich vorzugsweise um druckbasierte Energiespeicher, insbesondere vorzugsweise um gerade Druckfedern. Jedoch auch zugbasierte Energiespeicher oder andere Federtypen sind möglich.

Durch den mittels der Energiespeicher 9 vorgespannten Verspannring 8 erfolgt eine Verspannung der axialen Steckverbindung 3 in Umfangsrichtung. Hierzu weist der Verspannring 8 zumindest einzelne Vorsprünge 14 in seinem Innenumfang auf, die ausgebildet sind, mit den entsprechenden Gegenprofilierungen des nicht dargestellten Eingangsrings zusammenzuwirken, indem sie unter Vorspannung der Energiespeicher 9 an Flanken der Gegenprofilierungen zur Anlage kommen. Genauer gesagt werden unter Vorspannung die Vorsprünge 14 gegen schubseitige Flanken der Gegenprofilierungen gepresst, während die im Innenumfang des Profilrings 7 vorgesehenen Profilierungen 5 gegen zugseitige Flanken der Gegenprofilierungen gepresst werden. Durch die Verspannung gegen zugseitige Flanken und schubseitige Flanken der Gegenprofilierungen werden Anschlags- bzw. Klappergeräusche im Betrieb der Drehmomentübertragungsvorrichtung 1, das heißt unter Motorlast, verringert bzw. unterdrückt.

Um die Auflagefläche der verspannungsringseitigen Vorsprünge 14 an den schubseitigen Flanken der Gegenprofilierungen zu erhöhen, können die Vorsprünge 14 sich in axialer Richtung der Drehmomentübertragungsvorrichtung 1 erstreckende Abschnitte aufweisen.

Der Verspannring 8 weist zumindest einen Schalenabschnitt 10 auf, der den Energiespeicher 9 oder die Energiespeicher 9 zumindest teilweise im Wesentlichen schalenförmig umgibt. Auf einer distalen Seite des Ausgangsflansches 6 der ersten Baugruppe 2 geht der Schalenabschnitt 10 in einen Radialabschnitt 11 des Verspannrings 8 über.

Der Schalenabschnitt 11 weist eine Öffnung 12 auf, in der der Energiespeicher 9 vorgesehen ist. Wie in Figur 3 angedeutet, weist die Öffnung 12 einen Öffnungswinkel α auf, wobei der Öffnungswinkel α generell größer als 90° auszubilden ist. Der Öffnungswinkel α ist jedoch kleiner als 180°, vorzugsweise kleiner als 135°, insbesondere vorzugsweise kleiner als 120° auszubilden. Die Öffnung 12 weist in Richtung der Rotationsachse A der Drehmomentübertragungsvorrichtung 1, so dass unter Fliehkrafteinwirkung der Energiespeicher 9 in die Basis des Schalenabschnitts 10 gedrückt wird und vorzugsweise weitestgehend in der kompletten Innenfläche des Schalenabschnitts 10 zur Anlage kommt.

Der Schalenabschnitt 10 ist in einem Außenumfang des Verspannrings 8 ausgebildet, so dass quasi die Basis des Schalenabschnitts 10 den Außendurchmesser des Verspannrings 8 definiert. Insbesondere ist es daher von Vorteil, wenn der Schalenabschnitt 10 als Rotationsschalenabschnitt ausgebildet ist, das heißt im Wesentlichen drehsymmetrisch zur Rotationsachse A der Drehmomentübertragungsvorrichtung 1 ausgebildet ist.

Auf der Seite, die zum Ausgangsflansch 6 der ersten Baugruppe 2 benachbart bzw. am nächstliegenden angeordnet ist, weist der Schalenabschnitt 10 eine freie Kante 13 auf. Die freie Kante 13 des Schalenabschnitts 10 erstreckt sich vom in radialer Richtung am weitesten außen liegenden Bereich des Schalenabschnitts 10, das heißt im Wesentlichen von der Basis des Schalenabschnitts 10, 0,5 mm bis 3,0 mm in radialer Richtung zur Rotationsachse A der Drehmomentübertragungsvorrichtung 1. Der bevorzugte Erstreckungsbereich ist 0,75 mm bis 2,0 mm, der insbesondere bevorzugte Erstreckungsbereich ist 1,0 mm bis 1,5 mm in radialer Richtung zur Rotationsachse A.

Entsprechend dem zuvor erläuterten Aufbau des Verspannrings 8 ist der im Schalenabschnitt 10 vorgesehene Energiespeicher 9 bzw. sind die in den Schalenabschnitten 10 vorgesehenen Energiespeicher 9 in axialer Richtung zwischen dem Ausgangsflansch 6 der ersten Baugruppe 2 und dem Radialabschnitt 11 des Verspannrings 8 angeordnet. Sowohl die Schalenabschnitte 10 als auch die Energiespeicher 9 sind vorzugsweise gleichmäßig verteilt über den Umfang des Verspannrings 8 ausgebildet bzw. angeordnet.

Der Verspannring 8 ist vorzugsweise als einteiliges Blechbauteil ausgebildet. Jedoch ist es auch möglich, den Schalenabschnitt und den Radialabschnitt als getrennte Bauteile herzustellen und beispielsweise stoffschlüssig miteinander zu verbinden.

Die vorangegangenen Ausführungsbeispiele betreffen eine Drehmomentübertragungsvorrichtung 1 mit zumindest einer ersten Baugruppe 2, die mit einer Abtriebswelle eines Motors verbindbar ist, und zumindest einer zweiten Baugruppe, die getriebeseitig vormontierbar ist. Beide Baugruppen sind in axialer Richtung durch zumindest eine begrenzt axial verlagerbare Steckverbindung 3 mit ineinandergreifenden Profilierungen 5 und Gegenprofilierungen miteinander koppelbar und durch zumindest eine Verspannungseinrichtung 4, die zumindest einen Energiespeicher 9 und zumindest einen durch den Energiespeicher 9 beaufschlagbaren Verspannring 8 aufweist, verspannbar. Der Verspannring 8 weist zumindest einen Schalenabschnitt 10 auf, der den Energiespeicher 9 zumindest teilweise im Wesentlichen schalenförmig umgibt, um ein Ausknicken des Energiespeichers 9 unter Fliehkrafteinwirkung zu verhindern.

### Bezuaszeichenliste

- 1: Drehmomentübertragungsvorrichtung
- 2: erste Baugruppe
- 3: Steckverbindung
- 4: Verspannungseinrichtung
- 5: Profilierungen
- 6: Ausgangsflansch
- 7: Profilring
- 8: Verspannring
- 9: Energiespeicher
- 10: Schalenabschnitt
- 11: Radialabschnitt
- 12: Öffnung
- 13: freie Kante
- 14: Vorsprung
- 15: Gegenhalter
- 16: Halter
- A: Rotationsachse
- α: Öffnungswinkel

- 101: Drehmomentübertragungsvorrichtung
- 102: erste Baugruppe
- 103: Steckverbindung
- 104: Verspannungseinrichtung
- 105: Profilierungen
- 106: Ausgangsflansch
- 108: Verspannring
- 109: Energiespeicher
- 110: Anlageabschnitt

## Patentansprüche

1. Drehmomentübertragungsvorrichtung (1) mit zumindest einer ersten Baugruppe (2), die mit einer Abtriebswelle eines Motors verbindbar ist, und zumindest einer zweiten Baugruppe, die getriebeseitig vormontierbar ist, wobei beide Baugruppen in axialer Richtung durch zumindest eine Steckverbindung (3) mit ineinandergreifenden Profilierungen (5) und Gegenprofilierungen miteinander koppelbar sind und durch zumindest eine Verspannungseinrichtung (4), die zumindest einen Energiespeicher (9) und zumindest einen durch den Energiespeicher (9) beaufschlagbaren Verspannring (8) aufweist, verspannbar sind, **dadurch gekennzeichnet, dass** der Verspannring (8) zumindest einen Schalenabschnitt (10) aufweist, der den Energiespeicher (9) zumindest teilweise im Wesentlichen schalenförmig umgibt.

2. Drehmomentübertragungsvorrichtung (1) nach Anspruch 1, wobei eine Öffnung (12) des Schalenabschnitts (10), in der der Energiespeicher (9) vorgesehen ist, in Richtung einer Rotationsachse (A) der Drehmomentübertragungsvorrichtung (1) weist.

3. Drehmomentübertragungsvorrichtung (1) nach Anspruch 1 oder 2, wobei der Schalenabschnitt (10) in einem Außenumfang des Verspannrings (8) ausgebildet ist.

4. Drehmomentübertragungsvorrichtung (1) nach zumindest einem der Ansprüche 1 bis 3, wobei der Schalenabschnitt (10) als Rotationsschalenabschnitt ausgebildet ist.

5. Drehmomentübertragungsvorrichtung (1) nach zumindest einem der Ansprüche 1 bis 4, wobei der Schalenabschnitt (10) auf einer Seite in einen Radialabschnitt (11) des Verspannrings (8) übergeht.

6. Drehmomentübertragungsvorrichtung (1) nach Anspruch 5, wobei der Schalenabschnitt (10) auf einer anderen Seite eine freie Kante (13) aufweist, die vom in radialer Richtung am weitesten außen liegenden Bereich des Schalenabschnitts (10) 0,5mm bis 3,0mm, vorzugsweise 0,75mm bis 2,0mm, insbesondere vorzugsweise 1,0mm bis 1,5mm in radialer Richtung zu einer Rotationsachse (A) der Drehmomentübertragungsvorrichtung (1) vorspringt.

7. Drehmomentübertragungsvorrichtung (1) nach Anspruch 5 oder 6, wobei die erste Baugruppe (2) einen Ausgangsflansch (6) aufweist, der zumindest drehfest verbunden oder einteilig mit den Profilierungen (5) oder Gegenprofilierungen der Steckverbindung (3) ausgebildet ist, und der im Schalenabschnitt (10) vorgesehene Energiespeicher (9) in axialer Richtung zwischen dem Ausgangsflansch (6) und dem Radialabschnitt (11) des Verspannrings (8) angeordnet ist.

8. Drehmomentübertragungsvorrichtung (1) nach zumindest einem der Ansprüche 1 bis 7, wobei der Schalenabschnitt (10) einen Öffnungswinkel α aufweist, wobei 90°<α<180°, vorzugsweise 90°<α<135°, insbesondere vorzugsweise 90°<α<120° ist.

9. Drehmomentübertragungsvorrichtung (1) nach zumindest einem der Ansprüche 1 bis 8, wobei mehrere Schalenabschnitte (10), in denen jeweils zumindest ein Energiespeicher (9) vorgesehen ist, vorzugsweise gleichmäßig verteilt, in Umfangsrichtung des Verspannrings (8) ausgebildet sind.

10. Drehmomentübertragungsvorrichtung (1) nach zumindest einem der Ansprüche 1 bis 9, wobei der Energiespeicher (9) als Druckfeder, vorzugsweise als gerade Druckfeder, ausgebildet ist, und/oder der Verspannring (8) als Blechbauteil ausgebildet ist.

## Claims

1. Torque transmission apparatus (1) having at least one first assembly (2) which can be connected to an output shaft of an engine and at least one second assembly which can be preassembled on the transmission side, it being possible for the two assemblies to be coupled to one another in the axial direction by way of at least one plug-in connection (3) with profiles (5) and counter-profiles which engage into one another, and to be braced by way of at least one bracing device (4) which has at least one energy store (9) and at least one bracing ring (8) which can be loaded by way of the energy store (9), **characterized in that** the bracing ring (8) has at least one shell section (10) which surrounds the energy store (9) at least partially in a substantially shell-shaped manner.

2. Torque transmission apparatus (1) according to Claim 1, an opening (12) of the shell section (10), in which opening (12) the energy store (9) is provided, pointing in the direction of a rotational axis (A) of the torque transmission apparatus (1).

3. Torque transmission apparatus (1) according to Claim 1 or 2, the shell section (10) being configured in an outer circumference of the bracing ring (8).

4. Torque transmission apparatus (1) according to at least one of Claims 1 to 3, the shell section (10) being configured as a rotational shell section.

5. Torque transmission apparatus (1) according to at least one of Claims 1 to 4, the shell section (10) merging on one side into a radial section (11) of the bracing ring (8).

6. Torque transmission apparatus (1) according to Claim 5, the shell section (10) having, on the other side, a free edge (13) which projects from that region of the shell section (10) which lies furthest to the outside in the radial direction by from 0.5 mm to 3.0 mm, preferably from 0.75 mm to 2.0 mm, in particular preferably from 1.0 mm to 1.5 mm in the radial direction with respect to a rotational axis (A) of the torque transmission apparatus (1).

7. Torque transmission apparatus (1) according to Claim 5 or 6, the first assembly (2) having an output flange (6) which is at least connected non-rotatably or is configured in one piece with the profiles (5) or counter-profiles of the plug-in connection (3), and the energy store (9) which is provided in the shell section (10) being arranged in the axial direction between the output flange (6) and the radial section (11) of the bracing ring (8).

8. Torque transmission apparatus (1) according to at least one of Claims 1 to 7, the shell section (10) having an opening angle α, wherein 90° < α < 180°, preferably 90° < α < 135°, in particular preferably 90° < α < 120°.

9. Torque transmission apparatus (1) according to at least one of Claims 1 to 8, a plurality of shell sections (10), in which in each case at least one energy store (9) is provided, being configured in the circumferential direction of the bracing ring (8), preferably in a uniformly distributed manner.

10. Torque transmission apparatus (1) according to at least one of Claims 1 to 9, the energy store (9) being configured as a compression spring, preferably as a straight compression spring, and/or the bracing ring (8) being configured as a sheet metal component.

## Revendications

1. Dispositif de transmission de couple (1) comprenant au moins un premier ensemble (2) qui peut être relié à un arbre de sortie d'un moteur, et au moins un deuxième ensemble qui peut être pré-monté du côté transmission, les deux ensembles pouvant être accouplés l'un à l'autre dans la direction axiale par au moins une liaison par enfichage (3) pourvue de profils (5) et de profils homologues s'engageant les uns dans les autres et pouvant être serrés par au moins un dispositif de serrage (4) qui comporte au moins un accumulateur d'énergie (9) et au moins une bague de serrage (8) soumise à l'accumulateur d'énergie (9), **caractérisé en ce que** la bague de serrage (8) comporte au moins une partie formant coque (10) qui entoure l'accumulateur d'énergie (9) au moins en partie sensiblement à la manière d'une coque.

2. Dispositif de transmission de couple (1) selon la revendication 1, une ouverture (12) de la partie formant coque (10), dans laquelle l'accumulateur d'énergie (9) est prévu, étant tournée en direction d'un axe de rotation (A) du dispositif de transmission de couple (1).

3. Dispositif de transmission de couple (1) selon la revendication 1 ou 2, la partie formant coque (10) étant formée dans une périphérie extérieure de la bague de serrage (8).

4. Dispositif de transmission de couple (1) selon l'une au moins des revendications 1 à 3, la partie formant coque (10) étant conçue comme une partie formant coque rotative.

5. Dispositif de transmission de couple (1) selon l'une au moins des revendications 1 à 4, la partie formant coque (10) se transformant sur un côté en une partie radiale (11) de la bague de serrage (8).

6. Dispositif de transmission de couple (1) selon la revendication 5, la partie formant coque (10) comportant sur un autre côté un bord libre (13) qui fait saillie de la région la plus radialement extérieure de la partie formant coque (10) sur 0,5 mm à 3,0 mm, de préférence sur 0,75 mm à 2,0 mm, de façon particulièrement préférée sur 1,0 mm à 1,5 mm dans la direction radiale par rapport à un axe de rotation (A) du dispositif de transmission de couple (1).

7. Dispositif de transmission de couple (1) selon la revendication 5 ou 6, le premier ensemble (2) comportant une bride de sortie (6) qui est reliée au moins solidairement en rotation ou qui est conçue d'une seule pièce avec des profils (5) ou des profils homologues de la liaison par enfichage (3), et l'accumulateur d'énergie (9) prévue dans la partie formant coque (10) étant disposé dans la direction axiale entre la bride de sortie (6) et la partie radiale (11) de la bague de serrage (8).

8. Dispositif de transmission de couple (1) selon l'une au moins des revendications 1 à 7, la partie formant coque (10) ayant un angle d'ouverture α, avec 90° < α < 180°, de préférence 90° < α < 135°, de manière particulièrement préférée 90° < α < 120°.

9. Dispositif de transmission de couple (1) selon l'une au moins des revendications 1 à 8, une pluralité de parties formant coque (10), dans chacune desquelles au moins un accumulateur d'énergie (9) est prévu, étant conçues dans la direction circonférentielle de la bague de serrage (8), de préférence de manière uniformément répartie.

10. Dispositif de transmission de couple (1) selon l'une au moins des revendications 1 à 9, l'accumulateur d'énergie (9) étant conçu comme un ressort de compression, de préférence comme un ressort de compression droit, et/ou la bague de serrage (8) étant conçue comme un composant en tôle.
